(19) **Europäisches Patentamt**

**European Patent Office**

**Office européen des brevets**

(11) **EP 1 071 248 B1**

(12) **EUROPEAN PATENT SPECIFICATION**

(45) Date of publication and mention
of the grant of the patent:
**15.10.2003  Bulletin 2003/42**

(51) Int Cl.7: **H04L 25/03**

(21) Application number: **99600018.8**

(22) Date of filing: **18.10.1999**

(54) **Burst shaping**

Burstformung

Mise en forme de salves

(84) Designated Contracting States:
**CY DE DK ES FI FR GB GR IT SE**
Designated Extension States:
**AL RO SI**

(30) Priority:  **23.07.1999  GR 99100251**

(43) Date of publication of application:
**24.01.2001   Bulletin 2001/04**

(73) Proprietor: **Intracom S.A. Hellenic
Telecommunications & Electronics Industry
19002 Peania, Athens (GR)**

(72) Inventors:
• **Frantzeskakis, Manolis, c/o INTRACOM S.A.
Athens (GR)**
• **Posonidis, Aris, c/o INTRACOM S.A.
Athens (GR)**

(74) Representative: **Makris, Maria K.
Intracom S.A.,
Premetis 3,
Marousi
15125 Athens (GR)**

(56) References cited:
**EP-A- 0 631 398          US-A- 4 485 478
US-A- 4 843 352**

**Description**

**BACKGROUND OF THE INVENTION**

This invention relates to the generation of a band limited burst-like waveform in burst data transmission systems such as the time division multiple access (TDMA) communication systems, where spectral spread due to the burst gating process must be prevented and the transition time of burst opening and burst closing must be minimized, allowing minimal guard time between consecutively transmitted data bursts.

In burst transmission systems the transmission of the modulated waveform consists of burst-like segments separated by guard time intervals where no power is emitted. Gating the transmitted waveform can cause spectral spread resulting waste of expensive spectrum. For wireless systems in particular, gating can be obtained by properly switching on and off the modulator circuit, switching the power amplifier output, switching the input or the output of the pulse shaping filter, or even using a combination of the above. The trade-off involved in the overall gating problem hinges in the fact that as the transition time for muting the transmitter output becomes shorter the spectral spread becomes larger. Performing burst shaping in a way so that spectral spread is prevented while at the same time the required gating time is kept minimal results best resource exploitation both in time and frequency domain.

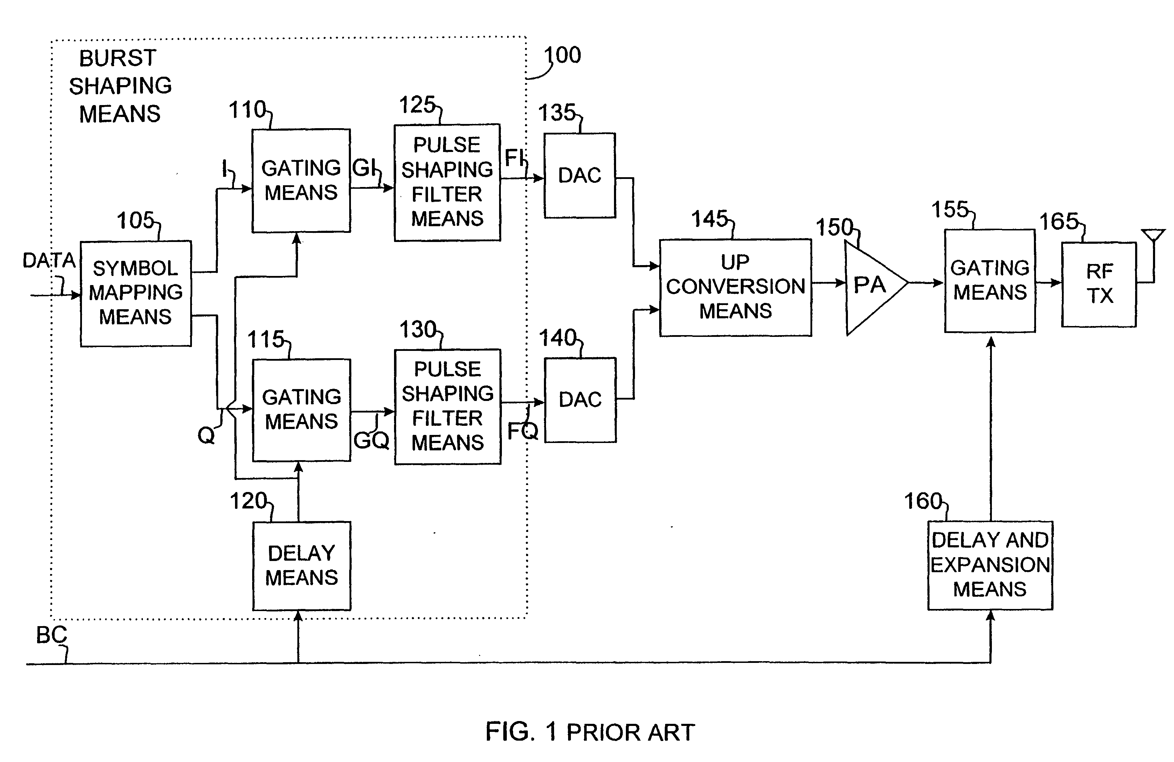

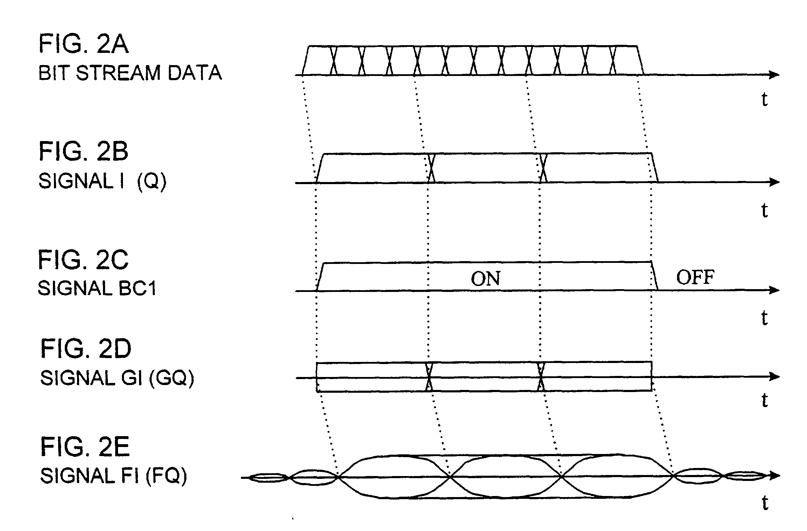

FIG.1 shows a typical prior art burst shaping circuit 100 used in a wireless burst transmitter system. Referring to FIG.1, the burst shaping circuit is coupled to receive as input a binary sequence *DATA* and a control signal *BC* and produce a band limited baseband complex waveform *(FI,FQ)*. The sequence *DATA* feeds a constellation mapping circuit 105 that produces the in-phase *I* and quadrature Q symbol sequences. The burst control signal *BC* is properly delayed and the resulting delayed signal controls the gating of the symbol sequences *I* and *Q*. The gated symbol sequences *GI* and GQ undergo pulse shaping to produce the complex waveform *(FI,FQ)*. FIG.2A through FIG.2E illustrate the waveforms related to the operation of the burst shaping circuit in FIG. 1. Successive steps of digital to analogue conversion, frequency up-conversion to a radio frequency, signal amplification, gating with a properly timed version of the control signal *BC* and radio transmission follow. The pulse shaping filters being placed after the baseband signal gating are responsible for the prevention of the spectral spread. This scheme is suggested in U.S.Pat. No 4485478 issued to Takada M. in 1984. A more efficient burst shaping structure employs a simple digital logic ensuring that the first and last symbols of a transmitted data burst are respectively preceded and followed by their antipodal signals. In this way, a zero crossing is introduced at the burst opening and burst closing points assisting the gating procedure. Both U.S. Pat. No 4483000 issued to Yamamoto K. and Atobe M. in 1984 and U.S.Pat. No 4843352 issued to Kamisaka T., Yagi K., Takahashi Y. and Nakamura S. in 1989 follow this principle.

A different route is taken in the Pat No EP631398 filed by Takai H., Kai K. and Yamasaki H. in 1994, where all possible signal transitions are stored in memory blocks. These transitions are categorized in burst opening, burst closing and payload data transitions. A control circuit is responsible for shifting out of the memory the appropriate stored sequence of samples and multiplexing the outputs of these memories. In this approach, pulse shaping is solely based on multiplexing pre-stored waveforms, while the well established practice of filter based pulse shaping is avoided. In this way, the transitions are controlled very accurately implying a tight control over the trade-off of frequency domain and time domain signal characteristics. However there is a penalty on the implementation complexity especially when the method is applied on dense constellation signalling such as 64 QAM.

**SUMMARY OF THE INVENTION**

According to the invention, a system for generating a band limited burst-like waveform is presented. The system combines filter based pulse shaping for the payload with multiplexing pre-stored waveforms for burst opening and burst closing. In this way, we obtain low complexity implementation and flexible control of the time-frequency signal characteristics at the same time. In particular, the system is responsive to an information bit sequence and a burst control signal and is essentially characterised by a symbol mapping device feeding a pair of pulse shaping filters and a pair of appropriately controlled storage devices maintaining burst opening and burst closing waveforms. The output of the pulse shaping filters and the storage devices are multiplexed to produce the band limited burst-like waveform. The stored waveforms may have a sinusoidal form, while the associated control logic may be realised by a finite state machine. If the invention is used in a wireless transmission system, additional gating circuitry improves the attenuation characteristics of the emitted gated signal. Transmission systems employing offset modulation formats such as OQPSK can easily be implemented in this framework.

Waveform shaping using waveform pattern storage has been proposed in the context of pulse shaping filters (U.S.Pat. No 4745628 issued to McDavid W.T. and Bryce W.W. in 1988). Nevertheless, introducing the use of stored waveform patterns for shaping the opening and closing of the burst waveform yields an amplitude attenuation change exceeding 30dB within a time interval equal to half a symbol period, while maintaining the spectrum efficiency of the continuous transmission. This result is very important since it allows the use of small guard time intervals between consecutively transmitted data bursts even in multipoint TDMA systems, where the reception power of the consecutive bursts may differ by several decades of decibels. Finally, one may observe that reducing the guard time overhead in a system translates to higher transmission bit rate and further spectrum efficiency.

**BRIEF DESCRIPTION OF THE DRAWINGS**

The features and advantages of the invention will be more apparent from the detailed description hereunder taken in conjunction with the accompanying drawings, wherein:

FIG.1      is a schematic block diagram of a prior art wireless burst transmitter system employing gating logic;
FIG.2A      through FIG.2E illustrate the waveforms useful to explain the operation of the circuit referred to in FIG. 1;
FIG.3      illustrates an embodiment of a burst shaping circuit according to the invention;
FIG.4A      through FIG.4I illustrate the waveforms useful to explain the operation of the circuit referred to in FIG. 3;
FIG.5      is an example of schematic block diagram of a wireless burst transmitter system employing the burst shaping circuit according to the invention;
FIG.6      is an example of schematic block diagram details of the waveform memory and recovery means referred to in FIG.3;

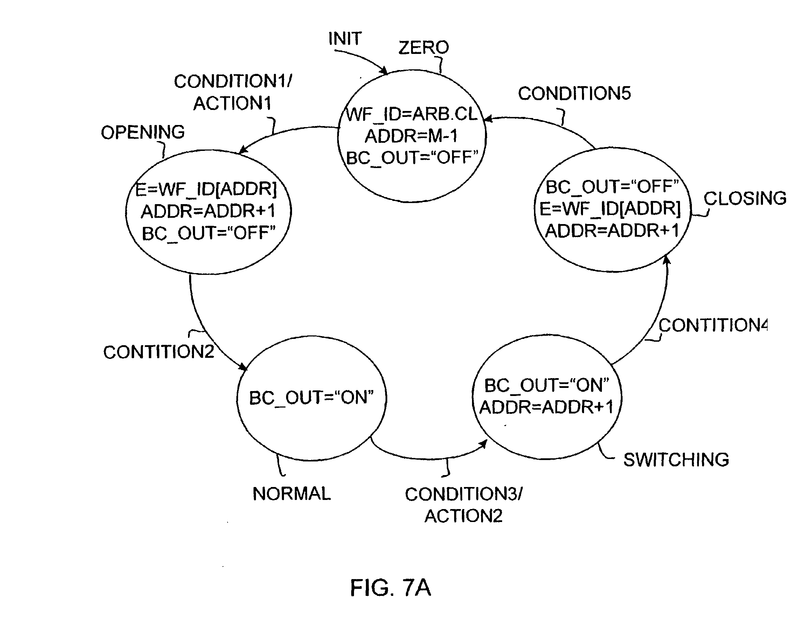

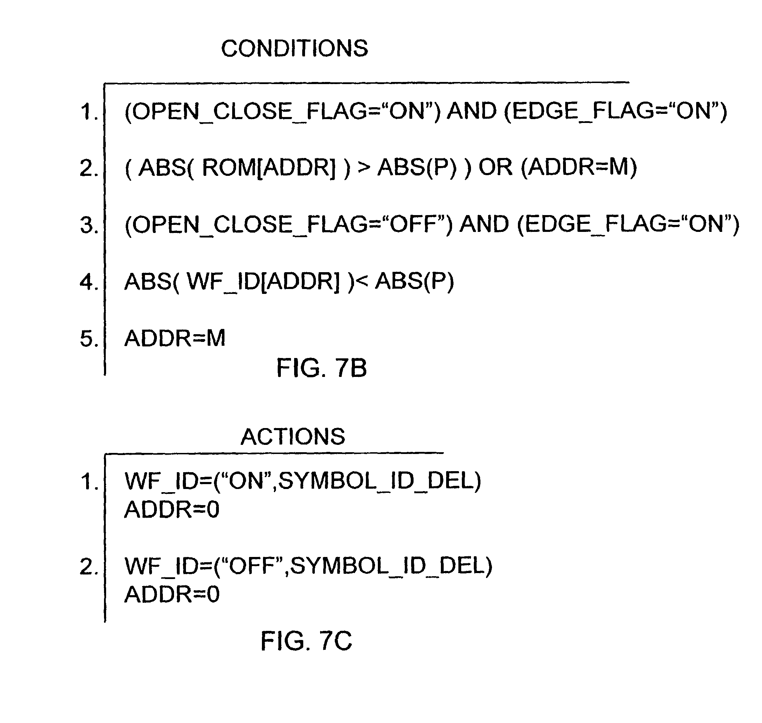

FIG.7A      through FIG.7B illustrate an example of flow diagram details of the control logic means referred to in FIG.6.

**DETAILED DESCRIPTION OF THE PREFERRED EMBODIMENTS**

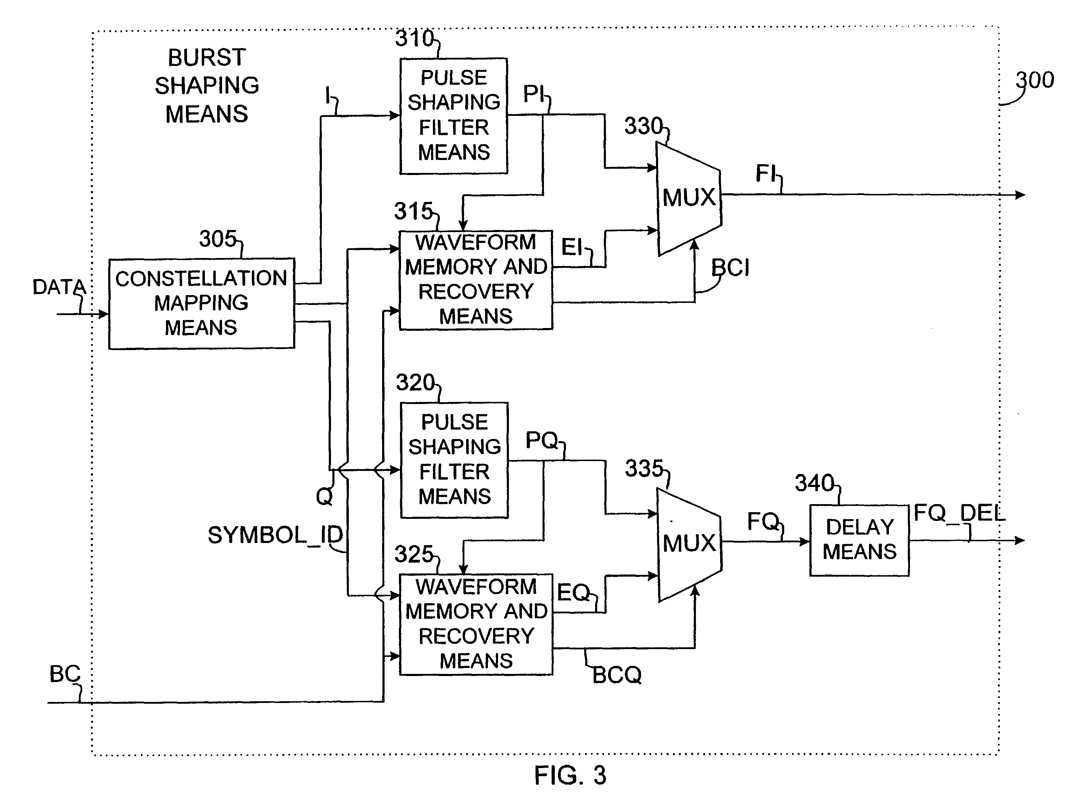

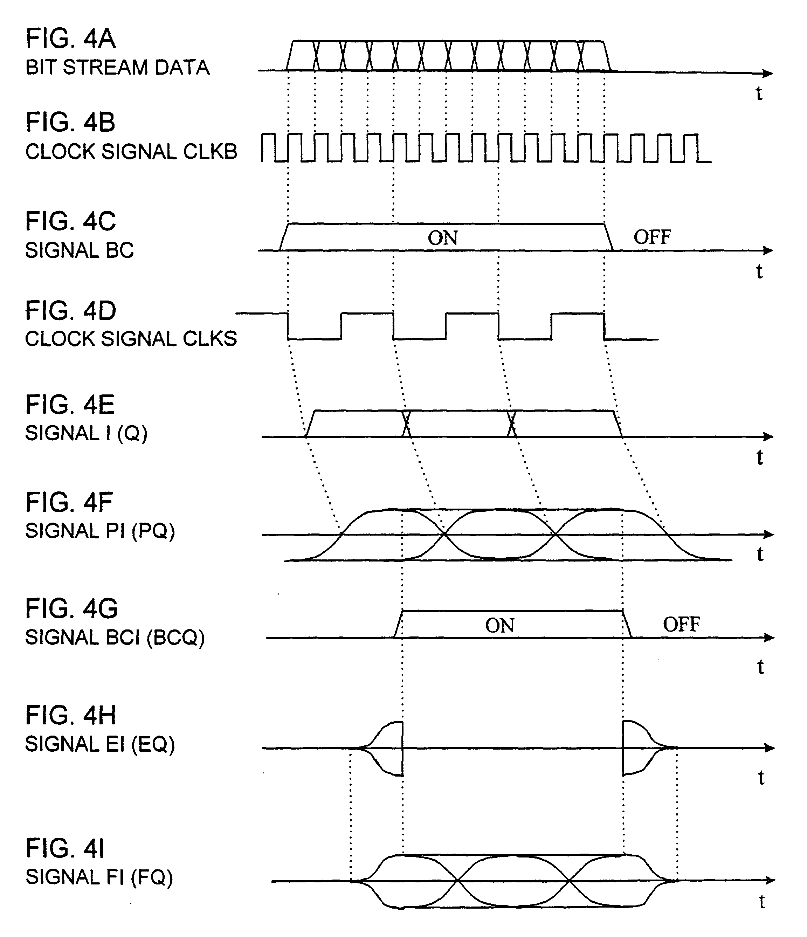

The embodiments described hereunder suggest realisations of the invention as examples without constituting any limitation whatsoever. Referring to FIG.3, there is shown a specific embodiment of a burst shaping system 300 for generating a band limited baseband burst-like complex sequence *(FI, FQ)* in accordance with the invention. The system is responsive to an information bit sequence *DATA* and a first burst control signal *BC* shown in FIG.4A and FIG.4C respectively. FIG.4B illustrates a synchronisation clock for the bit sequence *DATA*. The burst-like complex wave *(FI, FQ)* carries segments of information of the input bit sequence *DATA*, where a sequence segment is emitted at consecutive time instances in a time interval specified by an *"ON"* pulse of the burst control signal *BC*. The information bit sequence *DATA* is mapped on a complex symbol sequence *(I, Q)* by a constellation mapping means 305. This mapping comprises encoding a subsequence of *K* information bits *DATA(l-K+1),DATA(l-K+2),..., DATA(l)* emitted at *K* consecutive time instances *l-K+1, l-K+2, ...,l* on one complex symbol *(I(l), Q(l))*, where the said encoding is carried out in accordance with a specified constellation mapping of $2^K$ points on the plane and the said consecutive instances are separated by a bit period $T_b$. The said subsequence of *K* consecutive information bits dictate a *K*-bit symbol identifier *SYMBOL _ID (l)* indexed by the time instance *l*. FIG.4E illustrates a waveform of the symbol sequence *I* (or Q) for the special case where *K* takes a value equal to 4. FIG.4D illustrates the associated clock signal. The said sequence of complex symbols *(I, Q)* undergoes pulse shaping by a pair of real filters 310 and 320 preceded by a pair of interpolators. These interpolators generate *N-1* zeros for each incoming complex symbol. So, the interpolation factor is equal to an integer number *N* and the interpolated complex sequence has a sampling period equal to an amount of time *T*. In other words, an interpolator functions as sample rate alteration means. The output of the pulse shaping filters, shown in FIG.4F, is a band limited complex sequence *(PI, PQ)* and it is produced with an input to output latency time equal to *D.* A waveform memory and recovery means 315 is coupled to receive as a first input the real component *PI* of the said band limited sequence *(PI, PQ)*, as a second input the sequence of said symbol identifiers *SYMBOL_ID* and as a third input the said first burst control signal *BC* in order to produce a sequence *EI* and a second burst control signal *BCI*. The sequence *EI* incorporates the burst opening and burst closing waveforms synchronised to the second burst control signal *BCI*. The signals BCI and EI are illustrated in FIG.4G and FIG.4H respectively. The said burst opening and burst closing waveforms are selected from a bank of memory stored waveforms. A waveform memory and recovery means 320 is coupled to receive as a first input the imaginary component *PQ* of the said band limited sequence *(PI, PQ),* as a second input the sequence of said symbol identifiers *SYMBOL_ID* and as a third input the said first burst control signal *BC* in order to produce a sequence *EQ* and a third burst control signal *BCQ.* The said sequence *EQ* incorporates the burst opening and burst closing waveforms synchronised to the third burst control signal *BCQ*. The signals BCQ and EQ are illustrated again in FIG.4G and FIG.4H respectively. The said burst opening and burst closing waveforms are selected from a bank of memory stored waveforms. Two 2-input real multiplexer means 330 and 335 are visualised as a complex 2-input multiplexer coupled to receive as input the said complex sequence *(PI,PQ)* and the complex sequence *(EI.EQ)* in order to produce the said baseband burst-like complex sequence *(FI.FQ)*. In the latter, the real component sequence *FI*, illustrated in FIG.4I, is produced at a certain time instance *n* by assigning to *FI* the value of *PI* if the second burst control signal *BCI* is on state *"ON"* at that instance and assigning to *FI* the value of *EI* otherwise. Similarly, the imaginary component sequence *FQ*, illustrated in FIG.4I, is produced at a certain time instance *n* by assigning to *FQ* the value of *PQ* if the third burst control signal *BCQ* is on state "*ON*" at that instance and assigning to *FQ* the value of *EQ* otherwise.

A burst transmission system employing a modulation format exhibiting time offset between the in-phase and the quadrature components, such as the OQPSK modulation format, can be obtained according to the invention by simply appending a proper delay element at one of the output components. More specifically, referring to FIG.3, a delay means 340 coupled to receive as input the quadrature component sequence *FQ* of the band limited baseband burst-like complex sequence *(FI, FQ)* introduces a delay equal to half a symbol period and produces a delayed quadrature component sequence *FQ_DEL*.

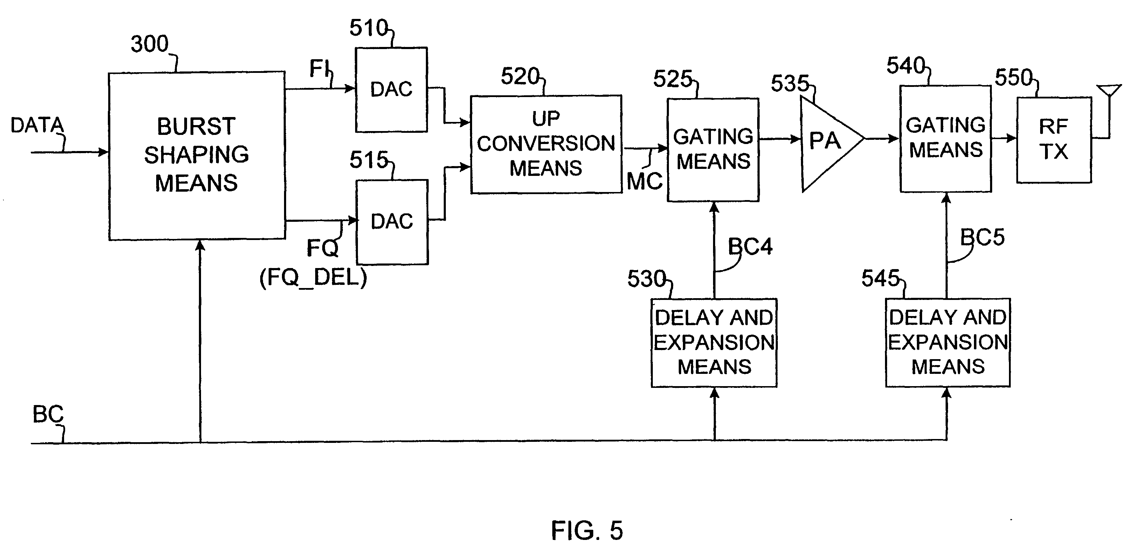

Referring to FIG.5, there is shown a specific embodiment of a system for generating a band limited modulated waveform in accordance with the invention. The system is coupled to receive as inputs an information bit sequence *DATA* and a burst control signal *BC*. The said modulated waveform carries segments of the bit sequence *DATA,* in which a sequence segment is emitted at consecutive instances in a time interval specified by an *"ON"* pulse of the burst control signal *BC*. The system comprises a burst shaping means 300, digital-to-analogue converter means 510 and 515, frequency up-conversion means 520, a delay and expansion means 530 and 545, gating means 525 and 540, an amplifier 535 and radio transmitter equipment 550. The burst shaping means 300 is coupled to receive the information bit sequence *DATA* and the burst control signal *BC* and carry out the processing stages previously described with reference to FIG.3 and FIG.4 to produce a band limited baseband burst-like complex sequence *(FI, FQ)* or *(FI, FQ_DEL)*. The digital-to-analogue converter means 510 and 515 are coupled to receive this complex sequence and produce a baseband analogue complex waveform. The frequency up-conversion means 520 is coupled to receive as input the said baseband analogue complex waveform and produce a modulated carrier signal *MC*. The delay and expansion means 530 is coupled to receive as input the said burst control signal *BC* and produce another burst control signal *BC4* by successive delaying the signal *BC* and expanding the pulses of the resulting delayed signal. The delay is specified by the amount of time equal to the latency time introduced between emitting an information bit from the said bit sequence *DATA* and producing the associated fragment of the modulated carrier *MC*. The expanding process is carried out so as the pulse width in signal *BC4* becomes no smaller than the time elapsing between the generation of the first sample of the in-phase and quadrature opening waveforms and the last sample of the in-phase and quadrature closing waveforms in the associated data burst. The gating means 525 is responsible for gating the modulated carrier signal *MC* in response to the burst control signal *BC4* to produce a first gated signal. The amplifier 535 amplifies the said first gated signal producing an amplified waveform. The delay and expansion means 545 is coupled to receive as input the burst control signal *BC* and produces a burst control signal *BC5* by successive delaying of the signal *BC* and expanding the pulses of the resulting delayed signal. The delay is specified by the amount of time equal to the latency introduced between emitting an information bit from the said bit sequence *DATA* and producing the associated fragment of the amplified waveform. The expanding process for signal *BC5* is similar to the one used for generating signal *BC4*. The gating means 540 is responsible for gating the said amplified waveform in response to the burst control signal *BC5* and produce a second gated signal. The RF transmission equipment 550 transmits the said second gated signal over the air.

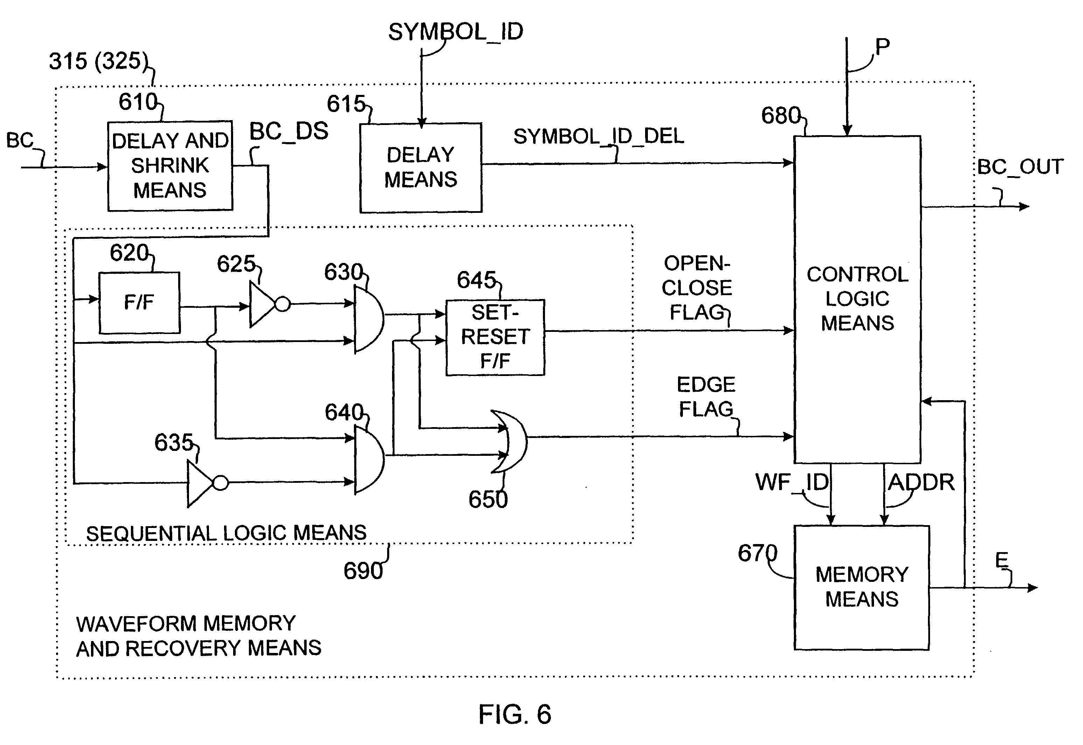

Referring to FIG.6, a preferred embodiment of the waveform memory and recovery means 315 (325) is coupled to receive as a input the real or the imaginary component *P* of the band limited sequence *(PI, PQ)* along with the sequence of symbol identifiers *SYMBOL_ID* and the first burst control signal *BC* producing accordingly the real or the imaginary component *E* of the complex sequence *(EI, EQ)* and the associated burst control signal *BC_OUT*. The waveform memory and recovery means comprises a delay and shrink means 610, a sequential logic means 690, a delay means 615, a memory means 670 and a control logic means 680. The delay and shrink means 610 is coupled to receive as input the first burst control signal *BC* and it produces the burst control signal *BC_DS* by delaying the said signal *BC* by a time interval equal to the latency time *D,* and by shrinking the pulse width of the resulting delayed signal by a time interval equal to one symbol period. The latency time *D* has been defined with reference to FIG.3. The delay means 615 is coupled to receive as input the said symbol identifier sequence *SYMBOL_ID* and it produces a delayed symbol identifier sequence *SYMBOL_ID_DEL* by introducing a time delay equal to the said latency time *D*.

The sequential logic means 690 is coupled to receive as input the said burst control signal *BC_DS* and it produces an *EDGE_FLAG* sequence and an *OPEN_CLOSE_FLAG* sequence. These sequences take binary values according to the following truth table:

| | | *BC_DS* | | *EDGE_FLAG* | *OPEN_CLOSE_FLAG* |
|---|---|---|---|---|---|
| Time instant: | | *n-1* | *n* | *n* | *n* |
| | | *"OFF"* | *"OFF"* | *"OFF"* | *"X"* |
| | | *"OFF"* | *"ON"* | *"ON"* | *"ON"* |
| | | *"ON"* | *"OFF"* | *"ON"* | *"OFF"* |
| | | *"ON"* | *"ON"* | *"OFF"* | *"X"* |

The time index n denotes successive time instances separated by a time interval equal to the said period *T*, while "*X*" signifies the don't care condition. An example circuitry implementing the above truth table is included in FIG. 6. The burst control signal BC_DS feeds a flip-flop 620. A two-input and-gate 630 receives as inputs the burst control signal BC_DS and the output of the flip-flop 620 inverted by an inverter 625. Another two-input and-gate 640 receives as inputs the output of the flip-flop 620 and the burst control signal BC_DS inverted by an inverter 635. The OPEN_CLOSE_FLAG is produced as the output of a set-reset flip-flop that is set when the output of the and-gate 630 goes "ON" and is reset when the output of the and-gate 640 goes "ON". The EDGE_FLAG is produced as the output of a two-input or-gate 650 receiving as inputs the outputs of the two and-gates 630 and 640.

The memory means 670 is responsible for storing a number of no more than $2^{K+1}$ waveforms comprising *M* samples each one. Half of these waveforms constitute burst opening waveforms, while the other half are the burst closing waveforms. Each waveform is associated to the in-phase (or the quadrature component) of a complex symbol in the said constellation mapping. The memory means is accessed by specifying a waveform identifier *WF_ID* and an address pointer *ADDR* to extract the memory content *WF_ID[ADDR]*. The waveform identifier *WF_ID* comprises *K+1* information bits, that is the opening-closing one-bit information and the K-bit associated symbol identifier. The address pointer *ADDR* ranges from 0 to *M-1*. We assume that the closing waveforms contain a zero valued sample *WF_ID[M-1]* at the position *M-1*.

An example of burst opening and burst closing waveforms are respectively given by the expressions

$$\frac{A}{2}\left[\sin\left(\frac{\pi}{M}\left(j-\frac{M}{2}+1\right)\right)+1\right]$$

and

$$\frac{A}{2}\left[\sin\left(\frac{\pi}{M}\left(\frac{M}{2}-j-1\right)\right)+1\right],$$

in which the sample index *j* takes values *j=0,1,...,M-1* and *A* signifies a factor independent of *j*, associated to a specific waveform.

The control logic means 680 comprises a five-state state machine coupled to receive as a first input the said band limited sequence component *P*, as a second input the said delayed symbol identifier sequence *SYMBOL_ID_DEL*, as a third input the said *EDGE_FLAG* sequence, as a fourth input the said *OPEN_CLOSE_FLAG* sequence and as a fifth input a memory content *WF_ID[ADDR]*, where the waveform identifier *WF_ID* and the address pointer *ADDR* are produced by the said control logic means along with the said output sequence *E* and the associated burst control signal *BC_OUT*. The said state machine is initialised in a *"zero"* state and operates at successive time instances separated by a time interval equal to the said period Tas follows:

    a. If the *"zero"* state is active the said identifier *WF_ID* specifies an arbitrary closing waveform as a current waveform, the address pointer *ADDR* takes the value *M-1* implying a value for the output value *E* equal to the stored sample *WF_ID[M-1]*, that is zero by assumption. The burst control signal *BC_OUT* takes the value "*OFF*" and if a first exit condition becomes true at time instant *n* then the waveform identifier *WF_ID* specifies as the current waveform the opening waveform of the symbol dictated by the value of *SYMBOL_ID_DEL* at instance *n,* the address pointer *ADDR* takes the value *0* and a *"opening"* state is introduced at instance *n+1*. The said first exit condition is given below:

        (EDGE_FLAG = "ON") AND (OPEN_CLOSE_FLAG = "ON").

    b. If the *"opening"* state is active at time instance *n* the value of the address pointer *ADDR* is increased by one and the value of the stored waveform sample *WF_ID[ADDR]* is assigned to the output *E.* If a second exit condition becomes true at instance n then the address pointer *ADDR* takes the value *0*, the burst control signal *BC_OUT* takes the value *"ON"* and a "*normal*" state is introduced at instance *n+1*. The said second exit condition is given below:

        (ABS(WF_ID[ADDR]) > ABS(P)) OR (ADDR=M)

    in which "*ABS*" signifies the extraction of the absolute value.

    c. If the *"normal"* state is active, the *"ON"* value of the burst control signal *BC_OUT* is maintained and if a third exit condition becomes true at time instance n then the waveform identifier *WF_ID* specifies as the current waveform the closing waveform of the symbol dictated by the value of *SYMBOL_ID_DEL* at instance *n*, the address pointer *ADDR* takes the value *0* and a *"switching"* state is introduced at instance *n+1*. The said third exit condition is given below:

(*EDGE_FLAG* = "*ON*") *AND* (*OPEN_CLOSE_FLAG* = "*OFF*").

d. If the *"switching"* state is active at time instance *n* the value of the address pointer *ADDR* is increased by one and the value of the stored waveform sample *WF_ID[ADDR]* is assigned to the output *E*. If a fourth exit condition becomes true at instance n then the address pointer *ADDR* takes the value *0*, the burst control signal *BC_OUT* takes the value *"OFF"* and a *"closing"* state is introduced at instance *n+1*. The said fourth exit condition is given below:

*ABS(WF_ID[ADDR]) < ABS(P)*

in which "*ABS*" signifies the extraction of the absolute value.

e. If the *"closing"* state is active at time instance *n* the value of the address pointer *ADDR* is increased by one and the value of the stored waveform sample *WF_ID[ADDR]* is assigned to the output *E*. If a fifth exit condition becomes true at instance n then the said *"zero"* state is introduced at instance *n+1*. The said fifth exit condition is given below:

*ADDR=M.*

Although the specific embodiments described so far comprise a two-component in-phase and quadrature baseband burst signal generation, the present invention applies to burst shaping of one-component baseband signals as well, such as BPSK or PAM modulation formatted signals. This can be achieved by simply omitting the circuitry implementing the processing stages of the quadrature phase component.

## Claims

1.    A system for generating a band limited baseband burst-like complex sequence *(FI, FQ)* responsive to an information bit sequence *DATA* and a first burst control signal *BC*, said burst-like complex sequence carrying segments of said bit sequence *DATA,* in which a sequence segment is emitted at consecutive time instants in a time interval specified by an "*ON*" pulse of said first burst control signal *BC*, wherein the system comprises:

means (305) for mapping the information bit sequence *DATA* on a complex symbol sequence *(I, Q)*, said mapping comprising encoding a subsequence of *K* information bits *DATA(I-K+1),DATA(I-K+2), ..., DATA(I)* emitted at *K* consecutive time instants *I-K+1, I-K+2, ..., I* on one complex symbol *(I(I), Q(I))*,
said consecutive time instants being separated by a bit
period $T_b$, said subsequence of *K* consecutive information bits dictating a *K*-bit symbol identifier *SYMBOL_ID (I)* produced at time instant *I*, said encoding being carried out in accordance with a specified constellation mapping of $2^K$ points on a plane;
means for interpolating the said sequence of complex symbols *(I, Q)* by an interpolation factor equal to an integer number *N* to produce an interpolated complex sequence having a period equal to an amount of time *T*;
a pulse shaping filter means (310,320) coupled to receive as input the said interpolated complex sequence and to produce a band limited complex sequence *(PI, PQ)*, said filter means introducing a latency time *D*;
a waveform memory and recovery means (315) coupled to receive as a first input the real component *PI* of the said band limited sequence *(PI, PQ)*, as a second input the sequence of said symbol identifiers *SYMBOL_ID* and as a third input the said first burst control signal *BC* and to produce a sequence *EI* and a second burst control signal *BCI*, said sequence *EI* comprising the burst opening and burst closing waveforms synchronised to the secpnd burst control signal *BCI*, said burst opening and burst closing waveforms being selected from a bank of memory stored waveforms;
a waveform memory and recovery means (325) coupled to receive as a first input the imaginary component *PQ* of the said band limited sequence *(PI, PQ)*, as a second input the sequence of said symbol identifiers *SYMBOL_ID* and as a third input the said first burst control signal *BC* and to produce a sequence *EQ* and a third burst control signal *BCQ*, said sequence *EQ* comprising the burst opening and burst closing waveforms synchronised to the third burst control signal *BCQ*, said burst opening and burst closing waveforms being selected from a bank of memory stored waveforms;
a multiplexer means (330,335) coupled to receive as input the said complex band limited sequence *(PI,PQ)* and the complex sequence *(EI,EQ)* and to produce the said baseband burst-like complex sequence *(FI,FQ)* in which the real component sequence *FI* is produced by assigning to *FI* at a certain time instant *n* the value of *PI* if the second burst control signal *BCI* is on state *"ON"* at that time instant and assigning to *FI* the value of *EI* otherwise the imaginary component sequence *FQ* is produced by assigning to *FQ* at a certain time instant *n* the value of *PQ* if the third burst control signal *BCQ* is on state *"ON"* at that time instant and assigning to *FQ* the value of *EQ* otherwise.

2. A system according to claim 1, where the waveform memory and recovery means (315,325) are coupled to receive as an input the real or the imaginary component *P* of the band limited sequence *(PI, PQ)* along with the sequence of symbol identifiers *SYMBOL_ID* and the first burst control signal *BC* to produce accordingly the real or the imaginary component E of the complex sequence *(EI, EQ)* and the associated burst control signal *BC_OUT*, the system comprising:

a delay and shrink means (610) coupled to receive as input the first burst control signal *BC* and to produce a burst control signal *BC_DS* by delaying the said signal *BC* by a time interval equal to the said latency time *D*, and by shrinking the pulse width of the resulting delayed signal at the leading edge of a pulse by a time interval equal to one symbol period;

a sequential logic means (690) coupled to receive as input the said burst control signal *BC_DS* and to produce an *EDGE_FLAG* sequence and a *OPEN_CLOSE_FLAG* sequence, said sequences taking binary values at successive time instants separated by a time interval equal to the said period *T* and being specified at each time instant *n* by the following truth table:

|  | BC_DS | | EDGE_FLAG | OPEN_CLOSE_FLAG |
|---|---|---|---|---|
| Time instant: | *n-1* | *n* | *n* | *n* |
|  | *"OFF"* | *"OFF"* | *"OFF"* | *"X"* |
|  | *"OFF"* | *"ON"* | *"ON"* | *"ON"* |
|  | *"ON"* | *"OFF"* | *"ON"* | *"OFF"* |
|  | *"ON"* | *"ON"* | *"OFF"* | *"X"* |

in which "*X*" signifies the don't care condition;

a delay means (615) coupled to receive as input the said symbol identifier sequence *SYMBOL_ID* and to produce a delayed symbol identifier sequence *SYMBOL_ID_DEL* by introducing a time delay equal to the said latency time *D;*

memory means (670) for storing a number of no more than $2^{K+1}$ waveforms comprising a number of no more than $2^K$ burst opening waveforms and an equal number of burst closing waveforms, each waveform comprising a number of samples equal to an integer number M and being associated to the in-phase or the quadrature component of a complex symbol in the said constellation mapping, said memory means is being accessed by specifying a waveform identifier *WF_ID* and an address pointer *ADDR* to extract the memory content *WF_ID [ADDR]*, said waveform identifier *WF_ID* carrying the opening-closing one-bit information and the *K*-bit associated symbol identifier, said address pointer *ADDR* ranging from *0* to *M-1*, said closing waveforms contain a *0* valued sample *WF_ID[M-1]* of rank *M-1*;

a control logic means (680) comprising a five-state state machine coupled to receive as a first input the said band limited sequence component *P*, as a second input the said delayed symbol identifier sequence *SYMBOL_ID_DEL*, as a third input the said *EDGE_FLAG* sequence, as a fourth input the said *OPEN CLOSE FLAG* sequence and as a fifth input a memory content *WF_ID[ADDR]*, wherein the waveform identifier *WF_ID* and the address pointer *ADDR* are produced by the said control logic means along with the said output sequence *E* and the associated burst control signal *BC_OUT*, said state machine being initialised in a *"zero"* state and operating at successive time instants separated by a time interval equal to the said period *T* as follows:

if the *"zero"* state is active the said identifier *WF_ID* specifies an arbitrary closing waveform as a current waveform, the said address pointer *ADDR* takes the value *M-1* implying a value for the said output value *E* equal to the stored sample *WF_ID[M-1]* of rank *M-1* of the said waveform, said burst control signal *BC_OUT* takes the value "*OFF*" and if a first exit condition becomes true at time instant *n*

then the waveform identifier *WF_ID* specifies as the current waveform the opening waveform of the symbol dictated by the value of *SYMBOL_ID_DEL* at time instant *n*, the address pointer *ADDR* takes the value *0* and a *"opening"* state is introduced at time instant *n+1*, said first exit condition being:

(*EDGE_FLAG = "ON"*) *AND* (*OPEN_CLOSE_FLAG = "ON*");

if the *"opening"* state is active at time instant *n* the value of the said address pointer *ADDR*

is increased by one, the value of the stored waveform sample *WF_ID[ADDR]* of rank *ADDR* in the said current waveform is assigned to said output *E*, and if a second exit condition becomes true at time instant *n* then the said address pointer *ADDR* takes the value *0*, the said burst control signal *BC_OUT* takes the value *"ON"* and a *"normal"* state is introduced at time instant *n+1*, said second exit condition being:

*(ABS(WF_ID[ADDR]) > ABS(P)) OR (ADDR=M)*
in which "*ABS*" signifies the extraction of the absolute value;
if the *"normal"* state is active the *"ON"* value of the said burst control signal *BC_OUT* is maintained and if a third exit condition becomes true at time instant *n* then the waveform identifier *WF_ID* specifies as the current waveform the closing waveform of the symbol dictated by the value of *SYMBOL_ID_DEL* at time instant *n,* the
address pointer *ADDR* takes the value *0* and a *"switching"* state is introduced at time instant *n+1*, said third exit condition being
*(EDGE_FLAG = "ON") AND (OPEN_CLOSE_FLAG = "OFF");*
if the *"switching"* state is active at time instant *n* the value of the said address pointer *ADDR*
is increased by one, the value of the stored waveform sample *WF_ID[ADDR]* of rank *ADDR* in the said current waveform is assigned to said output E, and if a fourth exit condition becomes true at time instant *n* then the said address pointer *ADDR*
takes the value *0*, the said burst control signal *BC_OUT* takes the value "*OFF*" and a *"closing"* state is introduced at time instant *n+1*, said fourth exit condition being:
*ABS(WF_ID[ADDR]) < ABS(P)*
in which "*ABS*" signifies the extraction of the absolute value;
if the *"closing"* state is active at time instant *n* the value of the said address pointer *ADDR* is
increased by one, the value of the stored waveform sample *WF_ID[ADDR]* of rank *ADDR* in the said current waveform is assigned to said output E, and if a fifth exit condition becomes true at time instant *n* then the said *"zero"* state is introduced at time instant *n+1*, said fifth exit condition being
*ADDR=M.*

**3.** A system for generating a band limited baseband burst-like complex sequence *(FI,FQ_DEL)* responsive to an information bit sequence *DATA* and a first burst control *signal BC*, said burst-like complex sequence exhibiting a time offset between the two components and carrying segments of said bit sequence *DATA*, in which a sequence segment is emitted at consecutive time instants in a time interval specified by an "ON" pulse of said first burst control signal *BC*, wherein the system comprises:

a means (300) for generating a band limited baseband burst-like complex sequence *(FI, FQ)* responsive to the information bit sequence *DATA* and the first burst control signal *BC* according to claim 1;
a delay means (340) coupled to receive as input the quadrature component sequence *FQ* of the band limited baseband burst-like complex sequence *(FI, FQ)* and to produce a delayed quadrature component sequence *FQ_DEL*.

**4.** A system according to claim 1, wherein the values of the samples of the burst opening and burst closing memory stored waveforms are **characterised by** the expressions:

$$\frac{A}{2}\left[ \sin\left( \frac{\pi}{M}\left( j - \frac{M}{2} + 1 \right) \right) + 1 \right]$$

and

$$\frac{A}{2}\left[ \sin\left( \frac{\pi}{M}\left( \frac{M}{2} - j - 1 \right) \right) + 1 \right]$$

respectively, in which *A* signifies a constant factor associated to a specific waveform and the index *j* takes values *j=0,1, ...,M-1*.

**5.** A system for generating a band limited modulated waveform responsive to an information bit sequence *DATA* and a first burst control signal *BC*, said modulated waveform carrying segments of said bit sequence *DATA*, in which a sequence segment is emitted at consecutive time instants in a time interval specified by an "*ON*" pulse of said first burst control signal *BC*, wherein the system comprises:

a means (300) for generating a band limited baseband burst-like complex sequence *(FI, FQ)* responsive to the information bit sequence *DATA* and the first burst control signal *BC* according to claim 1 or claim 3;

digital-to-analogue converter means (510,515) coupred to receive as input the complex sequence *(FI, FQ)* and to produce a baseband analogue complex waveform;

frequency up-conversion means (520) coupled to receive as input the said baseband analogue complex waveform and to produce a modulated carrier signal *MC;*

a delay and expansion means (530) coupled to receive as input the said first burst control signal *BC* and to produce a fourth burst control signal *BC4* by successive delaying of the signal *BC* and expanding the pulses of the resulting delayed signal, said delaying is specified by an amount of time equal to the latency time introduced between emitting an information bit in the said bit sequence *DATA* and producing the associated segment of the modulated carrier *MC,* said expanding is carried out so as the pulse width in signal *BC4* becomes no smaller than the time elapsing between the generation of the first sample of the in-phase and quadrature opening waveforms and the last sample of the in-phase and quadrature closing waveforms of the associated data burst;

means (525) for gating the modulated carrier signal *MC* in response to the fourth burst control signal *BC4* to produce a first gated signal;

means (535) for amplifying the said first gated signal to produce an amplified waveform;

a delay and expansion means (545) coupled to receive as input the said first burst control signal *BC* and to produce a fifth burst control signal *BC5* by successive delaying of the signal *BC* and expanding the pulses of the resulting delayed signal, said delaying is specified by an amount of time equal to the latency time introduced between emitting an information bit in the said bit sequence *DATA* and producing the associated segment of the amplified waveform, said expanding is carried out so as the pulse width in signal *BC5* becomes no smaller than the time elapsing between the generation of the first sample of the in-phase and quadrature opening waveforms and the last sample of the in-phase and quadrature closing waveforms of the associated data burst;

means (540) for gating the said amplified waveform in response to the fifth burst control signal *BC5* to produce a second gated signal;

means (550) for transmitting the said second gated signal.

## Patentansprüche

1. Ein System zum Erzeugen einer Band-limitierten Basisband Stoß-ähnlicher komplexen Sequenz *(FI,FQ)*, reagierend auf eine Informations-Bitsequenz *DATA* und ein erstes Kontrollsignal *BC*, wo die besagte Stoß-ähnliche komplexe Sequenz Segmente der genannten Bit-Sequenz *DATA* trägt, in der ein Sequenz-Segment in aufeinanderfolgenden Zeitinstanzen emittiert wird, in einem Zeitintervall definiert durch einen AN Impuls des genannten ersten Kontrollsignals *BC*, worin das System folgendes umfasst:

   Mittel (305) zum Abbilden der Informationsbitsequenz *DATA* auf eine komplexe Symbolsequenz *(I,Q)*, wobei die genannte Abbildung darin besteht, dass eine Subsequenz von K Informationsbit *DATA(I-K+1)*, *DATA (I-K+2), ... , DATA(I)* ausgesendet in *K* aufeinanderfolgenden Zeitpunkten I-*K+1, I-K+2, ... , I* auf einem komplexen Symbol *I(I),Q(I)* kodiert wird, und die besagte aufeinanderfolgende Zeitinstanzen getrennt durch eine BitPeriode $T_b$, sind, ausserdem die besagte Subsequenz von *K* aufeinanderfolgenden Informationsbit beschreiben ein K-bit langes Symbolkennzeichen *SYMBOL_ID(I)* erzeugt in der Zeitinstanz I, wobei die besagte Kodierung in Entsprechung zu einer spezifischen Konstellation einer Abbildung von $2^K$ Punkten auf eine Ebene ausgeführt wird;

   Mittel für die Interpolation der besagten Sequenz, von komplexen Symbolen *(I,Q)* durch einen Interpolationsfaktor gleich einer ganzen Zahl *N*, um eine interpolierte komplexe Sequenz zu erzeugen, die eine Periode gleich der Zeit *T* besitzt.

   Mittel für ein Filter zum gestalten von Pulsen (310, 320), so aufgestellt, dass als Eingabe die besagte interpolierte komplexe Sequenz erhält, und eine Band-limitierte komplexe Sequenz *(PI,PQ)* erzeugt, dabei führt der genannte Filter eine Latenzzeit *D* ein;

   Mittel zum wellenförmigen Speichern und zur Wiederherstellung (315) so gekoppelt, dass sie als erste Eingabe die reale Komponente Pl der genannten Band-limitierten Sequenz *(PI,PQ),* als zweite Eingabe die Sequenz der genannten Symbolkennzeichen *SYMBOL_ID* und als dritte Eingabe das genannte erste Stoß-Kontrollsignal *BC* und als Ausgabe eine Sequenz *EI* und ein zweites Stoß-Kontrollsignal *BCI*, die Stoß-eröffnende und die Stoß-abschließende Wellenform umfasst, synchronisiert bezüglich des zweiten Stoß-Kontrollsignals *BCI*, wobei die zwei genannten Wellenformen (eröffnende und abschließende) aus einer Speicherbank solcher Wellenformen selektiert werden;

Einen wellenförmigen Speicher und Mittel zur Wiederherstellung (325) so gekoppelt, dass sie als erste Eingabe die imaginäre Komponente *PQ* des genannten Band-limitierten Sequenz *(PI,PQ)* und als zweite Eingabe die Sequenz der genannten Symbolkennzeichen *SYMBOL_ID* und als dritte Eingabe das genannte erste Stoß-Kontrollsignal *BC*, und als Ausgabe eine Sequenz *EQ* und ein drittes Stoß-Kontrollsignal *BCQ*, die genannte Sequenz *EQ* beinhaltet die Stoß-eröffnende und die Stoß-abschließende Wellenform, synchronisiert bezüglich des dritten Stoß-Kontrollsignals *BCQ*, wobei die zwei genannten Wellenformen (eröffnende und abschließende) aus einer Speicherbank solcher Wellenformen selektiert werden;

Mittel zum Multiplex (330,335) so aufgestellt, dass als Eingabe die komplexe Sequenz limitierter Bandbereite *(PI,PQ)* und die komplexe Sequenz *(EI,EQ)* und als Ausgabe die genannte Basisband Stoß-ähnliche komplexe Sequenz *(FI,FQ)*, in der die reale Komponente Sequenz *FI* dadurch entsteht, dass *FI* zu einem bestimmten Zeitpunkt n den Wert von *P1*, wenn das zweite Stoß-Kontrollsignal *BCI* im Zustand "ON" zum gegebenen Zeitpunkt, und den Wert von *EI* in allen anderen Fällen besitzt; die imaginäre Komponente Sequenz *FQ* entsteht

dadurch, dass dem *FQ* zu einem Zeitpunkt n der Wert von *PQ* zugewiesen wird, wenn sich das dritte Stoß-Kontrollsignal *BCQ* im Zustand *"ON"* zu diesem Zeitpunkt befindet, sonst wird *FQ* der Wert von *EQ* zugewiesen.

2. Ein System in Entsprechung zum Anspruch 1 (315,325), wo der Weilenform Speicher und die Mittel zur Wiederherstellung so gekoppelt sind, dass sie als Eingabe die reale oder imaginäre Komponente *P* der Band-limitierten Sequenz *(PI,PQ)* zusammen mit der Sequenz der Symbolkennzeichen *SYMBOL_ID* und dem ersten Stoß-Kontrollsignal *BC* erhalten, um entsprechend den realen oder imaginären Anteil *E* der komplexen Sequenz *(EI,EQ)* und des assoziierten Stoß-Kontrollsignals *BC_OUT zu* produzieren, wobei das System folgendes umfasst:

Mittel zum Verzögern und Verkürzen (610) so aufgestellt, dass sie als Eingabe das erste Stoß-Kontrollsignal *BC* und als Ausgabe das Stoß-Kontrollsignal *BC_DS* haben, dadurch dass das genannte Signal *BC* um ein Zeitintervall gleich der genannten Latenzzeit *D* verzögert wird, und die Impulsbreite des so entstehenden verzögerten Signals an der führenden Kante eines

Impulses um ein Zeitintervall gleich der Symbolperiode verkürzt wird;

Mittel sequentieller Logik (690) so aufgestellt, dass als Eingang das genannte Stoß-Kontrollsignal *BC_DS* und als Ausgabe eine Sequenz *EDGE_FLAG* und eine Sequenz *OPEN_CLOSE_FLAG* dienen, wobei die genannten Sequenzen binäre Werte zu aufeinanderfolgenden Zeitpunkten, die durch ein Zeitintervall gleich der besagten Periode T getrennt werden, und die zum jedem Zeitpunkt n wie in der nachfolgenden Tabelle angegeben werden:

| | BC_DS | | EDGE_FLAG | OPEN_CLOSE_FLAG |
|---|---|---|---|---|
| *Zeitpunkt:* | *n-1* | *n* | *n* | *n* |
| | *"OFF"* | *"OFF"* | *"OFF"* | *"X"* |
| | *"OFF"* | *"ON"* | *"ON"* | *"ON"* |
| | *"ON"* | *"OFF"* | *"ON"* | *"OFF"* |
| | *"ON"* | *"ON"* | *"OFF"* | *"X"* |

In der *"X"* den gleichgültigen Zustand beschreibt.

Mittel zur Verzögerung (615) aufgestellt mit der genannten Symbolkennzeichensequenz *SYMBOL_ID* als Eingabe und eine verzögerte Symbolkennzeichensequenz *SYMBOL_ID_DEL* als Ausgabe, durch die Einführung einer zeitlichen Verzögerung gleich der genannten Latenzzeit *D*;

Mittel zum speichern (670) einer Anzahl von nicht mehr als $2^{K+1}$ Wellenformen, die für nicht mehr als $2^K$ Stoß-eröffnenden Wellenformen und einer gleichen Anzahl von Stoßabschließenden Wellenformen, wo jede Wellenform eine Anzahl von Stichwerten gleich einer ganzen Zahl M und assoziiert zur in-Phase oder der Quadratur Komponente eines komplexen Symbols in der besagten Abbildungskonstellation, wo auf den genannten Speicher durch die Spezifikation eines Wellenform Kennzeichens *WF_ID* und einen Adresszeiger *ADDR* zugegriffen wird; um den Speicherinhalt *WF_ID[ADDR]*, das genannte Wellenform Kennzeichen *WF_ID* beinhaltet die eröffnende und abschließende ein-Bit Information und das mit dem K-Bit assoziierte Kennzeichen, der genannte Adresszeiger *ADDR* variiert von 0 bis *M-1,* die genannten abschließenden Wellenformen enthalten eine Nullwert Stichprobe *WF_ID[M-1]* der Reihe *M-1.*

Mittel für eine Kontrolllogik (680), umfassend einen Zustandsautomaten mit finiten Zuständen, so aufgestellt, dass diese als erste Eingabe die genannte Band-limitierte Sequenzkomponente *P*, als zweite Eingabe die genannte verzögerte Symbolkennzeichensequenz *SYMBOL_ID_DEL*, als dritte Eingabe die genannte *EDGE_FLAG* Sequenz, als vierte Eingabe die genannte *OPEN_CLOSE_FLAG* Sequenz und als fünfte Eingabe den Speicherinhalt *WF_ID[ADDR]*, wobei das Kennzeichen der Wellenform *WF_ID* und der Adresszeiger *ADDR* durch die besagte Kontrolllogik produziert werden, zusammen mit der genannten Ausgangssequenz E und dem assoziierten Stoß Kontrollsignal *BC_OUT*; der genannte Zustandsautomat wird im Nullzustand initialisiert und operiert in aufeinanderfolgenden Zeitpunkten, die durch ein Zeitintervall gleich der genannten Periode *T*, wie im folgenden beschrieben:

Wenn der Nullzustand aktiv ist und das genannte Kennzeichen *WF_ID* eine beliebige abschließende Wellenform als die aktuelle Wellenform beschreibt, dem genannten Speicherzeiger *ADDR* wird der Wert *M-1* zugewiesen, welcher einen Wert für den genannten Ausgangswert E gleich der gespeicherten Stichprobe *WF_ID [M-1]* der Reihe *M-1* der genannten Wellenform impliziert, das genannte Stoß-Kontrollsignal *BC_OUT* erhält den Wert "OFF", wenn eine erste Ausgangsbedingung zum Zeitpunkt n wahr wird, dann das Wellenform-Kennzeichen *WF_ID* gibt an als die aktuelle Wellenform die eröffnende Wellenform des Symbols angegeben durch den Wert von *SYMBOL_ID_DEL* zum Zeitpunkt n, der Adresszeiger *ADDR* erhält den Wert *0* und ein eröffnender Zustand wird zum Zeitpunkt *n+1* eingeführt, wobei die genannte Anfangsbedingung folgende ist:
*(EDGE_FLAG="ON") AND (OPEN_CLOSE_FLAG="ON*"); sollte der eröffnende Zustand zum Zeitpunkt n aktiv sein, so wird der Wert des Adresszeigers um eins erhöht, der Wert des gespeicherten Wellenform-Kennzeichens WF_ID[ADDR] ADDR. in der Reihe der genannten Wellenform, wird der genannten Ausgabe *E* und sollte eine zweite Ausgangsbedingung zum Zeitpunkt n wahr werden, dann wird dem genannten Adresszeiger der Wert 0 zugewiesen, das genannte Stoß-Kontrollsignal BC_OUT erhält den Wert "ON" und ein "Normalzustand" wird zum Zeitpunkt n+1 eingeführt, wobei die genannte zweite Ausgangsbedingung wie folgt lautet:
*(ABS(WF_ID[ADDR])>ABS(P)) OR (ADDR=M)* worin *ABS* die Extraktion der absoluten Werte andeutet;

sollte der "Normalzustand" aktiv sein, so wird der Wert *"ON*" des genannten Stoß Kontrollsignals *BC_OUT* beibehalten, und wenn eine dritte Ausgangsbedingung zum Zeitpunkt *n* wahr wird, dann gibt das Wellenform Kennzeichen *WF_ID* an, als aktuelle Wellenform die abschließende Wellenform des Symbols angegeben durch der Wert von *SYMBOL_ID_DEL* zum Zeitpunkt *n,* der Adresszeiger *ADDR* erhält den Wert *0* und ein Übergangszustand ist eingeführt zum Zeitpunkt *n+1*, wobei die dritte Ausgangsbedingung folgende ist:
*(EDGE_FLAG="ON") AND (OPEN_CLOSE_FLAG="OFF");* ist der Übergangszustand aktiv zum Zeitpunkt *n,* so wird der Wert des genannten Adresszeigers um eins erhöht, der Wert der gespeicherten Wellenform Stichprobe *WF_ID[ADDR]* in der Reihe *ADDR* in der genannten Wellenform wird der Ausgabe *E* gleichgesetzt, und wenn eine vierte Bedingung zum Zeitpunkt n wahr wird, dann der genannte Adresszeiger *ADDR* erhält den Wert *0*, das genannte Stoß-Kontrollsignal *BC_OUT* erhält den Wert *"OFF*" und ein abschließender Zustand wird zum Zeitpunkt *n+1* eingeführt, wobei die genannte vierte Bedingung folgende ist:
*ABS(WF_ID[ADDR])>ABS(P)*
worin *ABS* die Extraktion der absoluten Werte andeutet; ist der Abschlusszustand zum Zeitpunkt n aktiv, so wird der Wert des genannten Adresszeigers um eins erhöht, der Wert der gespeicherten Wellenform Stichprobe *WF_ID[ADDR]* der Position ADDR in der genannten Wellenform wird der Ausgabe E gleichgestzt, und wenn eine fünfte Ausgangsbedingung zum Zeitpunkt n wahr wird, dann wird zum Zeitpunkt n+1 der genannte Nullzustand eingeführt, wobei die fünfte Bedingung folgende ist:
*ADDR=M.*

3. Ein System zur Generierung einer Stoß-ähnlichen komplexen Sequenz mit limitierter Bandbreite (FI,FQ_DEL) reagierend auf eine Informationsbitsequenz DATA und einem ersten Stoß-Kontrollsignal BC, wobei die genannte Stoß-ähnliche komplexe Sequenz eine zeitliche Verschiebung zwischen den beiden Komponenten vorweist, und Segmente der genannten Sequenz DATA trägt, in der ein Sequenzsegment zu aufeinanderfolgenden Zeitpunkten in einem Zeitintervall, angegeben durch einen "ON" Puls des genannten ersten Stoß-Kontrollsignals BC, ausgesendet wird, wobei das System folgendes umfasst:

Mittel (300) zum Erzeugen einer Stoß-ähnlichen komplexen Sequenz mit limitierter Bandbreite (FI,FQ), reagierend auf eine Informationsbitsequenz DATA und das erste Stoß-Kontrollsignal BC in Entsprechung zum Patentanspruch 1;

Mittel zu einer Verzögerung (340) so aufgestellt, dass als Eingabe die Quadraturkomponentensequenz FQ der Stoß-ähnlichen komplexen Basisband-Sequenz mit limitierter Bandbreite (FI,FQ) und zum Erzeugen einer verzögerten Quadraturkomponentensequenz FQ_DEL.

4. Ein System, in Entsprechung zum Patentanspruch 1, worin die Stichprobenwerte der im Speicher gespeicherten Wellenformen zur Eröffnung und Abschluss des Stoßes sind **gekennzeichnet durch** die Ausdrücke:

$$\frac{A}{2}\left[\sin\left(\frac{\pi}{M}\left(j-\frac{M}{2}+1\right)\right)+1\right]$$

und

$$\frac{A}{2}\left[\sin\left(\frac{\pi}{M}\left(\frac{M}{2}-j-1\right)\right)+1\right]$$

entsprechend, worin A einen konstanten Faktor assoziiert zu einer spezifischen Wellenform und der Index j die Werte j=0,1,...,M-1 haben kann.

5. Ein System zum Erzeugen einer modulierten Wellenform mit limitierter Bandbreite reagierend auf eine Informationsbitsequenz DATA, und ein erstes Stoß-Kontrollsignal BC, wobei die genannte modulierte Wellenform Segmente der genannten Bitsequenz DATA trägt, worin ein Sequenzsegment zu aufeinanderfolgenden Zeitpunkten mit einem durch den "ON" Puls des genannten ersten Stoß-Kontrollsignals BC angegebenen Zeitintervall ausgesendet wird, worin das System folgendes umfasst:

Mittel (300) zur Generierung einer stoßähnlichen komplexen Basisband Sequenz mit limitierter Bandbreite (FI,FQ) reagierend auf eine Informationsbitsequenz DATA und dem ersten Stoß-Kontrollsignal BC entsprechend den Patentansprüchen 1 oder 3;

Mittel zur Digital- Analog Wandlung (510,515) so gekoppelt, dass als Eingabe die Komplexe Sequenz (FI,FQ) dient und eine Basisband analoge komplexe Wellenform produziert wird;

Mittel zur Frequenzumwandlung (520) so aufgestellt, dass als Eingabe die genannte Basisband analoge komplexe Wellenform dient und ein moduliertes Trägersignal MC erzeugt wird;

Mittel zur Verzögerung und Erweiterung (530) so aufgestellt, dass das erste Stoß-Kontrollsignal BC als Eingabe dient und ein viertes Stoß-Kontrollsignal BC4 durch sukzessive Verzögerung des Signals BC und Erweiterung der Pulse des so erzeugten verzögerten Signals, wobei die besagte Verzögerung durch eine Zeitmenge gleich der Latenzzeit eingeführt zwischen dem Senden eines Informationsbit in der besagten Bitsequenz DATA und der Produktion des assoziierten Segments des modulierten Trägers MC, wobei die beschriebene Expansion wird so ausgeführt, dass die Pulsbreite im Signal BC4 nicht kleiner als die vergangene Zeit zwischen der Erzeugung des ersten Stichprobenpunktes der in-Phase und Quadratur öffnenden Wellenformen, und der letzten Stichprobe der in-Phase und Quadratur abschließenden Wellenformen der assoziierten Datenstoße;

Mittel (525) zum Einschränken (gating) des modulierten Signalträgers MC als Antwort auf das vierte Stoß-Kontrollsignal BC4 zum Erzeugen eines ersten eingeschränkten Signals;

Mittel (535) zur Verstärkung des besagten ersten eingeschränkten Signals, um eine verstärkte Wellenform zu erzeugen;

Mittel zur Verzögerung und Erweiterung (545), so aufgestellt, dass als Eingabe das genannte erste Stoß-Kontrollsignal BC empfangen wird, und ein fünftes Stoß-Kontrollsignal BC5 durch sukzessive Verzögerung des Signals BC und Erweiterung des Pulses des resultierenden verzögerten Signals, wobei die genannte Verzögerung angegeben wird durch die Zeitmenge gleich der Latenzzeit, die zwischen dem Emittieren eines Informationsbit in der genannten Bitsequenz DATA und der Herstellung des assoziierten Segments des BC5 eingeführt wird, die nicht kleiner als die Zeit wird, die vergeht zwischen der Generierung der ersten Stichprobe der in-Phase und Quadratur eröffnenden Wellenform und der letzten Stichprobe der in-Phase und Quadratur abschliessenden Wellenform des assoziierten Datenstoßes;

Mittel (540) für die Einschränkung der genannten verstärkten Wellenform, als Reaktion auf das fünfte Stoß-Kontrollsignal BC5, um ein zweites eingeschränkte Signal zu produzieren;

Mittel (550) zum Senden des genannten zweiten eingeschränkten Signals.

### Revendications

1. Un système qui génère une séquence complexe *(FI, FQ)* en paquets en bande de base, responsive à une séquence de bits d'information *DATA* et un signal de control de burst *BC*, mentionnée séquence complexe en paquets portant des segments de bits de la séquence *DATA,* dans laquelle chaque segment est émit dans des instances temporels successifs. L'intervalle de temps est défini par une impulsion 'ON' au début du un signal de control de burst *BC*. Le système se comprit des éléments suivants:

   Un élément (350) de transformation de la séquence de bit d'information *DATA* à une séquence de symboles complexe *(I, Q)*, dont la transformation comprends un codage d'une séquence de *K* bit d'information *DATA(I-K+1), DATA(I-K+2), ..., DATA(I)* émis durant *K* instances de temps consécutives *I-K+1, .... ,I* aux symboles complexes *(I(I), Q(I))*, avec les instances de temps consécutives séparées d'une période de bit $T_b$, avec la sous-séquence de *K* bit d'information consécutive formant un symbole à *K* bit identifiant *SYMBOL_ID(I)* généré à l'instance de temps *I*, et dont le codage est réalisé en accords avec une constellation spécifique de $2^k$ points sur le plan ;
   Un élément pour interpoler la séquence des symboles complexes *(I, Q)* par un facteur d'interpolation égal à un nombre entier *N*, pour la production d'une séquence complexe interpolée d'une période *T*;
   Un filtre de mise en forme (d'impulsions) (310, 320) couplé de sorte à recevoir la séquence complexe interpolée et produit une séquence complexe à bande limitée *(PI, PQ)*. Le filtre ajoute du retard *D* ;
   Une mémoire et un rétablissement (315) couplé de sorte à recevoir en première entrée la composante réelle PI de la séquence complexe à bande limitée *(PI, PQ)*, en deuxième entrée la séquence des symboles de bits identifiant *SYMBOL_ID* et en troisième entrée le signal de control de burst *BC* en produisant une séquence *EI* et un deuxième signal du control de burst BCI. Les signaux de burst du début et de la fin sont choisis d'une 'banque' des signaux ;
   Une mémoire et un rétablissement (325) couplé de sorte à recevoir comme entrée en première entrée la composante imaginaire *PQ* de la séquence complexe à bande limitée *(PI, PQ),* en deuxième entrée la séquence des symboles de bits identifiant *SYMBOL_ID* et en troisième entrée le signal du control de burst *BC* en produisant une séquence *EQ* et un troisième signal du control de burst *BCQ*. Les signaux du début et de la fin sont choisis d'une 'banque' des signaux ;
   Un multiplexeur (330, 335) couplé de sorte à recevoir comme entrée la séquence complexe à bande limitée *(PI, PQ)* et la séquence complexe *(EI, EQ)* et de générer la séquence complexe en bande de base *(FI, FQ)* dans laquelle la composante réelle est composée en donnant à FI, dans un instance temporel *n,* la valeur *PI* si le deuxième signal de control de burst *BCI* est '*ON*' dans cet instance particulier et en donnant à *FI,* la valeur *BI* dans le cas contraire ; la composante imaginaire est composée en donnant à *FQ,* dans un instance temporel *n*, la valeur *PQ* si le troisième signal de control de burst *BCQ* est '*ON*' dans cet instance particulier et en donnant à *FQ,* la valeur *EQ* dans le contraire cas.

2. Un système en accord avec la réclamation 1,ou la mémoire et l'élément de rétablissement (315, 325) couplé de sorte à recevoir comme entrée la composante réelle ou imaginaire P de la séquence en bande limitée *(PI, PQ)* en parallèle de la séquence des symboles de bits identifiant *SYMBOL_ID* et le premier signal du control de burst *BC* pour produire respectivement la composante réelle ou imaginaire *E* de la séquence complexe *(EI, EQ)* et le signal du control de burst associé *BC_OUT*. Le système se comprit des modules suivants:

Un élément de retard et un élément de rétrécissement (610) couplé de sorte à recevoir comme entrée le premier signal du control de burst *BC* et générer un signal du control de burst *BC_DS* en retardant le signal *BC* par un intervalle temporel *D* et en rétrécissant la largeur d'impulsion du signal retardé au front d'impulsion par un intervalle temporel égal à une période de symbole ;
Un élément de logique séquentiel (690) couplé de sorte à recevoir comme entrée le signal du control de burst *BC_DS* et produire à la sortie une séquence *EDGE_FLAG* et une séquence *OPEN_CLOSE_FLAG*. Ces séquences prennent des valeurs binaires dans des instances de temps consécutives sépares par un intervalle temporel égal à une période *T,* et sont définies pour chaque instance *n* par la table suivante ('X' signifie le cas neutre) :

| Instant Temporel | *BC_DS* | | *EDGE_FLAG* | *OPEN_CLOSE_FLAG* |
|---|---|---|---|---|
| | *n-1* | *n* | *n* | *n* |
| | "OFF" | "OFF" | "OFF" | "X" |
| | "OFF" | "ON" | "ON" | "ON" |
| | "ON" | "OFF" | "ON" | "OFF" |
| | "ON" | "ON" | "OFF" | "X" |

Un élément de retard (615) couplé de sorte à recevoir comme entrée la séquence des symboles de bits identifiant *SYMBOL_ID* et à produire la séquence des symboles de bits identifiant retardés *SYMBOL_ID_DEL* par l'introduction d'un retard temporel égal à *D* ;
Un élément de mémoire (670) pour stocker un nombre de pas plus que $2^{k+i}$ signaux contenant un nombre de pas plus de $2^k$ des signaux d'entrée du burst et $2^k$ des signaux de sortie du burst, chaque signal contenant un nombre des *M* échantillons, *M* étant un nombre entier, et étant associé à la composante en quadrature ou en phase du symbole complexe de la constellation; l'élément de mémoire est accédée par définissant un signal identificateur *WF_IF* et un pointer d'adresse *ADDR* pour extraire la contenu de mémoire *WF_IF[ADDR]* ; le signal identificateur *WF_IF* porte le 1-bit d'entrée et de sortie et les *K*-bits du symbole identificateur ; le pointer d'adresse *ADDR* prend des valeurs entre *0* et M; les signaux de sortie contiennent un échantillon *WF_ID[M-1]* de valeur 0 dans la gamme *M-1* ;
Un élément de logique de commande (680) contenant une machine d'état de cinq états couplé de sorte à recevoir en première entrée la composante P de la séquence complexe à bande limitée, en deuxième entrée la séquence des symboles de bits identifiant retardés *SYMBOL_ID_DEL*, en troisième entrée la séquence *EDGE_FLAG,* en quatrième entrée la séquence *OPEN_CLOSE_FLAG* et en cinquième entrée la contenu de mémoire *WF_IF[ADDR]* ; le signal identificateur *WF_IF* et le pointer d'adresse *ADDR* sont générés par l'élément de logique de commande, la séquence de sortie E et le signal de sortie associé de control de burst *BC_OUT* ; la machine d'état est initialisé à un état *'zero'* et fonctionne dans des instances de temps consécutives séparés entre eux par des intervalles égaux à T :
si l'état *'zero'* est active, l'identificateur *WF_IF* assigne un signal quelconque de sortie comme le signal de courant et le pointer d'adresse *ADDR* prend la valeur *M-1*, indiquant que la valeur du signal de sortie *E* est égale à l'échantillon enregistré *WF_ID[M-1]* dans la gamme *M-1* ; le signal de control de burst *BC_OUT* prend la valeur '*OFF*' et si une première condition de sortie devient *'vrai'* dans l'instance *n*, l'identificateur *WF_IF* assigne la séquence d'entrée de symbole de valeur SYMBOL_ID_DEL dans l'instance *n,* comme le signal de courant et le pointer d'adresse *ADDR* prend la valeur *0* et un état *'d'entrée'* est introduit dans l'instance *n+1* ; la première condition de sortie étant:
    *(EDGE_FLAG = 'ON') AND (OPEN_CLOSE_FLAG = 'ON')* si l'état *'d'entrée'* est active dans l'instance *n,* la valeur du pointer d'adresse *ADDR* est haussée par 1, la valeur de l'échantillon enregistré *WF_ID[M-1]* de la gamme *ADDR* pendant le signal de courant est assigné au signal de sortie E et si une deuxième condition de sortie devient '*vrai*' dans l'instance *n*, le pointer d'adresse *ADDR* prend la valeur *0*, le signal de control de burst *BC_OUT* prend la valeur '*ON*' et un état '*normal*' est introduit dans l'instance *n+1* ; la première condition de sortie étant:
    *(ABS(WF_ID[ADDRR]) > ABS (P)) OR (ADDR=M)* dans laquelle *ABS* signifie l'extraction de valeur absolue ;
si l'état *'normal'* est active, la valeur 'ON' du signal de control de burst *BC_OUT* ne change pas, et si une troisième condition de sortie devient '*vrai*' dans l'instance *n*, l'identificateur *WF_IF* assigne la séquence de sortie de symbole de valeur SYMBOL_ID_DEL dans l'instance n, comme le signal de courant, et le pointer d'adresse *ADDR* prend la valeur *0* et un état '*de commutation*' est introduit dans l'instance *n+1* ; la troisième condition de sortie étant:

*(EDGE_FLAG = 'ON') AND (OPEN_CLOSE_FLAG = 'OFF')*

si l'état '*de commutation*' est active dans l'instance *n,* la valeur du pointer d'adresse *ADDR* est haussée par 1, la valeur de l'échantillon enregistré *WF_ID[M-1]* de la gamme *ADDR* pendant le signal de courant est assigné au signal de sortie E et si une quatrième condition de sortie devient '*vrai*' dans l'instance n, le pointer d'adresse *ADDR* prend la valeur *0*, le signal de control de burst *BC_OUT* prend la valeur '*OFF*' et un état '*de fermeture*' est introduit dans l'instance *n+1* ; la quatrième condition de sortie étant:

*(ABS(WF_ID[ADDR]) < ABS (P))* dans laquelle *ABS* signifie l'extraction de valeur absolue ;

si l'état '*de fermeture*' est active dans l'instance *n,* la valeur du pointer d'adresse *ADDR* est haussée par 1, la valeur de l'échantillon enregistré *WF_ID[M-1]* de la gamme *ADDR* pendant le signal de courant est assigné au signal de sortie E et si une cinquième condition de sortie devient '*vrai*' dans l'instance *n,* l' état '*zero*' est introduit dans l'instance *n+1* ; la cinquième condition de sortie étant:

*ADDR=M*

**3.** Un système qui génère une séquence complexe limitée en bande de base *(FI, FQ_DEL)* qui répond à une séquence de bit d'information *DATA* et à un signal de control de burst initial *BC*, appelé séquence complexe exhibant de décalage temporelle entre les deux composants et transportant des segments de séquence de bit *DATA,* par lequel une séquence de segments est transmise á des instances de temps consécutive dans une intervalle de temps spécifié par un pulse «ON» du signal de control de burst nommé *BC*, se compose de;

Un élément (300) qui génère une séquence complexe à bande limitée de base de type burst *(FI, FQ)* qui répond à la séquence de bit d'information *DATA* et au signal de control de burst initial *BC* en accord avec la réclamation 1;

Un élément de retard (340) couplé de sorte à recevoir comme entrée la composante quadrature *FQ* de la séquence complexe à bande limitée de base de type burst *(FI, FQ)* et à produire la composante quadrature retardée *FQ_DEL* ;

**4.** Un système en accord avec la réclamation 1, dans lequel les valeurs des échantillons enregistrées de signaux de burst d'entrée et de sortie sont **caractérisés par** l'expression suivant :

$$\frac{A}{2}\left[\sin\left(\frac{\pi}{\text{M}}\left(j - \frac{\text{M}}{2} + 1\right)\right) + 1\right],$$

et

$$\frac{A}{2}\left[\sin\left(\frac{\pi}{\text{M}}\left(\frac{\text{M}}{2} - j - 1\right)\right) + 1\right]$$

respectivement, ou *A* signifie un facteur constant associé à un signal spécifique et j prend des valeurs *j=0,1, ..., M-1*.

**5.** Un système qui génère un signal modulé a bande limitée qui répond à une séquence de bit d'information *DATA* et à un signal de control de burst initial *BC*, appelé signal modulé transportant des segments de séquence de bit *DATA*, par lequel une séquence de segments est transmise á des instances de temps consécutives dans une intervalle de temps spécifié par un pulse «ON» du signal de control de burst nommé *BC*, se compose de;

Un élément (300) qui génère une séquence complexe à bande limitée de base de type burst *(FI, FQ)* qui répond à la séquence de bit d'information *DATA* et au signal de control de burst initial *BC* en accord avec la réclamation 1 ou la réclamation 3;

Des éléments de transformation digital-analogiques (510, 515) couplés de sorte à recevoir comme entrée la séquence complexe *(FI, FQ)* et à produire un signal analogique complexe de bande de base;

Un élément de conversion en fréquence supérieure (520) couplé de sorte à recevoir comme entrée le signal analogique complexe de bande de base et à produire un signal modulé à la fréquence porteuse *MC;*

Un élément de retard et d'élargissement (530) couplé de sorte à recevoir comme entrée le signal nommé signal de control de burst initial *BC* et à produire un quatrième signal de control de burst *BC4* en retardant consécutivement le signal *BC* et en élargissant les pulses du signal retardé résultant, de tel sorte que le retard soit spécifié par un temps égal au temps d'attente introduit entre la transmission d'un bit d'information dans la séquence de bit *DATA* et la production du segment associé à la fréquence porteuse modulé *MC,* de tel sorte que l'élargissement de la largeur du pulse du signal *BC4* ne devient pas plus petit que le temps passé entre la génération du premier échantillon du signal en phase et en quadrature du signal d'entrée et le dernier échantillon en phase et en quadrature du signal de sortie du burst de donnée associé;

Un élément (525) de coupure du signal de la fréquence porteuse modulé *MC* en réponse au quatrième signal de control de burst *BC4* qui produit un premier signal de coupure;

Un élément (535) d'amplification pour le premier signal de coupure qui produit un signal amplifié;

Un élément de retard et d'élargissement (545) couplé de sorte à recevoir comme entrée le signal nommé signal de control de burst initial *BC* qui produit un cinquième signal de control de burst *BC5* en retardant consécutivement le signal *BC* et en élargissant les pulses du signal retardé résultant, de tel sorte que le retard soit spécifié par un temps égal au temps d'attente introduit entre la transmission d'un bit d'information dans la séquence de bit *DATA* et la production du segment associé au signal amplifié, de tel sorte que l'élargissement de la largeur du pulse du signal *BC5* ne devient pas plus petit que le temps passé entre la génération du premier échantillon du signal en phase et en quadrature du signal d'entrée et le dernier échantillon en phase et en quadrature du signal de sortie du burst de donnée associé;

Un élément (540) de coupure du signal amplifié en réponse au cinquième signal de control de burst *BC5* qui produit un second signal de coupure;

Un élément (550) pour transmettre le second signal de coupure;

FIG. 1 PRIOR ART

EP 1 071 248 B1

FIG. 2A
BIT STREAM DATA

FIG. 2B
SIGNAL I (Q)

FIG. 2C
SIGNAL BC1

ON          OFF

FIG. 2D
SIGNAL GI (GQ)

FIG. 2E
SIGNAL FI (FQ)

FIG. 3

FIG. 4A
BIT STREAM DATA

FIG. 4B
CLOCK SIGNAL CLKB

FIG. 4C
SIGNAL BC

ON                OFF

FIG. 4D
CLOCK SIGNAL CLKS

FIG. 4E
SIGNAL I (Q)

FIG. 4F
SIGNAL PI (PQ)

FIG. 4G
SIGNAL BCI (BCQ)

ON                OFF

FIG. 4H
SIGNAL EI (EQ)

FIG. 4I
SIGNAL FI (FQ)

FIG. 5

EP 1 071 248 B1

FIG. 6

FIG. 7A

EP 1 071 248 B1

CONDITIONS

| | |
|---|---|
| 1. | (OPEN_CLOSE_FLAG="ON") AND (EDGE_FLAG="ON") |
| 2. | ( ABS( ROM[ADDR] ) > ABS(P) ) OR (ADDR=M) |
| 3. | (OPEN_CLOSE_FLAG="OFF") AND (EDGE_FLAG="ON") |
| 4. | ABS( WF_ID[ADDR] )< ABS(P) |
| 5. | ADDR=M |

FIG. 7B

ACTIONS

| | |
|---|---|
| 1. | WF_ID=("ON",SYMBOL_ID_DEL) ADDR=0 |
| 2. | WF_ID=("OFF",SYMBOL_ID_DEL) ADDR=0 |

FIG. 7C

EP 1 071 248 B1